# EUROPÄISCHE PATENTSCHRIFT

(11) **EP 3 492 724 B1**
(45) Veröffentlichungstag und Bekanntmachung des Hinweises auf die Patenterteilung: **11.11.2020**
(21) Anmeldenummer: 18207710.7
(22) Anmeldetag: 22.11.2018
(51) Int. Cl.: F02D 41/00, F02D 43/00, F02M 26/01, F02D 13/02, F02B 37/10, F02M 26/06, F02M 26/08, F02M 26/23, F02M 26/35

(54) **VERFAHREN ZUR STEUERUNG EINES ABGASRÜCKFÜHRSYSTEMS UND BRENNKRAFTMASCHINE MIT EINER STEUEREINHEIT ZUR DURCHFÜHRUNG DES VERFAHRENS**
METHOD FOR CONTROLLING AN EXHAUST GAS RECIRCULATION SYSTEM AND COMBUSTION ENGINE WITH A CONTROL UNIT FOR CARRYING OUT THE METHOD
PROCÉDÉ DE COMMANDE D'UN SYSTÈME DE RECIRCULATION DES GAZ D'ÉCHAPPEMENT ET MOTEUR À COMBUSTION INTERNE DOTÉ D'UNE UNITÉ DE COMMANDE DESTINÉE À LA MISE EN OEUVRE DUDIT PROCÉDÉ

(30) Priorität: 01.12.2017 DE 102017221734
(43) Veröffentlichungstag der Anmeldung: 05.06.2019
(73) Patentinhaber: VOLKSWAGEN AKTIENGESELLSCHAFT, 38440 Wolfsburg (DE)
(72) Erfinder: Groenendijk, Axel, 38518 Gifhorn (DE); Mathusall, Lucas, 38556 Bokensdorf (DE)

(56) Entgegenhaltungen:
- WO-A2-2004/076831
- DE-A1-102013 223 089
- DE-A1-102014 013 884
- FR-A3- 2 944 323
- US-A1- 2013 131 964

## Beschreibung

Die Erfindung betrifft ein Verfahren zur Steuerung eines Abgasrückführsystems und eine Brennkraftmaschine mit einer Steuereinheit zur Durchführung des Verfahrens. Insbesondere betrifft die Erfindung ein Verfahren zur Steuerung einer Abgasrückführrate. Die Erfindung betrifft im Speziellen Hubkolbenbrennkraftmaschinen für Kraftfahrzeuge sowie Kraftfahrzeuge mit solchen Hubkolbenbrennkraftmaschinen, insbesondere mit Hubkolbenbrennkraftmaschinen, die primär zum Antrieb des Kraftfahrzeuges dienen.

Aus DE 10 2013 223 089 A1 ist ein Verfahren zum Steuern eines Abgasrückführsystems in einem Verbrennungsmotor bekannt. Gemäß diesem Verfahren soll die Motorbetriebstemperatur mit einer vorgegebenen Motorbetriebstemperaturschwelle des Verbrennungsmotors (IAGR-Schwellen genannt) verglichen werden. Bei Unterschreiten der Schwelle soll ein erster interner Abgasrückführ-Modus (IAGR-Modus) aktiviert werden. Bei Überschreiten der Schwelle soll der erste IAGR-Modus deaktiviert und ein zweiter IAGR-Modus aktiviert werden. Das Dokument nimmt auch Bezug auf einen optionalen externen Abgasrückführ-Modus (EAGR-Modus) und eine EAGR-Schwelle. Der EAGR-Modus soll bei Überschreiten der EAGR-Schwelle aktiviert werden. Während des aktivierten IAGR-Modus ist ein Abgasventil eines Zylinders geöffnet, während an dem gleichen Zylinder auch ein Ansaugventil geöffnet ist. Es wird darauf hingewiesen, dass ein Ansaugdrosselventil und ein variabler Abgasauslass eines Turboladers dazu verwendet werden können, die Menge an rückgeführtem Abgas zu steuern. Weitere Details, insbesondere zu Umschaltvorgängen zwischen verschiedenen Zuständen eines oder mehrerer der genannten Abgasrückführ-Modi und den damit verbundenen Problemen in Bezug auf dabei entstehende Abgasemissionen, sind dem Dokument nicht zu entnehmen.

Aus WO 2004/076831 A2 ist ein Verfahren zur Steuerung einer Abgasrückführung bekannt, wobei zur internen Abgasrückführung ein Auslassventil bei geöffnetem Einlassventil während der Ansaugphase geöffnet wird. Ferner kann der Ladedruck reduziert werden, um die IAGR-Rate zu steuern.

Es hat sich gezeigt, dass bei Abgasrückführsystemen, die in diskreten Stufen schaltbar sind - beispielsweise mittels sogenannten Schiebenocken mit zwei oder mehr Nockenkonturen, die bedarfsweise aktivierbar sind - temporär erhöhte Emissionen auftreten, wenn zwischen zwei Schaltstufen umgeschaltet wird. Beispielsweise treten erhöhte Emissionen auf, wenn eine interne Abgasrückführung durch Schalten zwischen zwei Stufen aktiviert oder deaktiviert wird. Ausgelöst durch den Schaltvorgang treten dann über einen gewissen Zeitraum deutlich erhöhte Stickoxidemissionen (NOx-Emissionen) und/oder Rußemissionen auf, die als lokale Emissionspeaks bezeichnet werden können.

Der Erfindung liegt die Aufgabe zugrunde, ein Verfahren zur Steuerung eines Abgasrückführsystems sowie eine Brennkraftmaschine zur Verfügung zu stellen, mittels welchen der Schadstoffausstoß von Brennkraftmaschinen reduziert werden kann, insbesondere indem die vorstehend erläuterten Emissionspeaks vermieden oder deutlich reduziert werden.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes Verfahren betrifft die Steuerung eines Abgasrückführsystems einer Brennkraftmaschine mit mindestens einem Brennraum, wobei der Brennraum mindestens ein Einlassventil aufweist, das im geöffneten Zustand einen Einlasskanal mit dem Brennraum verbindet. Der Einlasskanal steht in strömungsleitender Verbindung mit einem Saugrohr stromaufwärts des Brennraums. Der Brennraum weist zudem mindestens ein Auslassventil auf, das im geöffneten Zustand den Brennraum mit einem Auslasskanal verbindet. Der Auslasskanal steht in strömungsleitender Verbindung mit einer Abgasleitung, über welche - mit oder ohne Einbeziehung einer Abgasnachbehandlungsanlage - Abgas über den Einlasskanal zurück zum Brennraum geleitet werden kann.

Es ist eine interne Abgasrückführung (IAGR) vorgesehen, wobei unter einer internen Abgasrückführung eine Rückführung von Abgas über mindestens ein Auslassventil in den Brennraum verstanden wird. Zur internen Abgasrückführung wird mindestens ein Auslassventil während einer Ansaugphase der Brennkraftmaschine bei geöffnetem Einlassventil ebenfalls zumindest teilweise geöffnet (auch als *second event* oder Zweithub bezeichnet). Durch den im Brennraum herrschenden Unterdruck strömt neben Frischluft und - wie nachfolgend erläutert - extern zurückgeführtem Abgas über das mindestens eine geöffnete Einlassventil auch Abgas über das Auslassventil in den Brennraum. Zusätzlich zu der internen Abgasrückführung ist eine externe Abgasrückführung (EAGR) vorgesehen, wobei die externe Abgasrückführung in den Brennraum über den Auslasskanal, die Abgasleitung und den Einlasskanal über mindestens ein Einlassventil erfolgt.

Das erfindungsgemäße Verfahren betrifft die Steuerung der Abgasrückführrate (AGR-Rate), welche sich zusammensetzt aus einer internen Abgasrückführrate (IAGR-Rate) und einer externen Abgasrückführrate (EAGR-Rate). Wenn mehrere Abgasrückführpfade vorgesehen sind, beispielsweise ein EAGR-Hochdruckpfad und ein EAGR-Niederdruckpfad, setzt sich die EAGR-Rate aus der Hochdruck-EAGR-Rate und der Niederdruck-EAGR-Rate zusammen. Dies wird in Zusammenhang mit der Figurenbeschreibung noch näher erläutert.

Die interne Abgasrückführung ist zumindest in zwei diskreten Stufen zwischen einem aktivierten Zustand und einem teilaktivierten oder deaktivierten Zustand durch einen Schaltvorgang schaltbar ausgebildet. Unter einem Schaltvorgang im Sinne der Erfindung ist insbesondere das Verstellen von Schiebenocken-Anordnungen zu verstehen, bei welchen zwischen zwei oder mehr alternativen Nockenkonturen durch (insbesondere axiales) Verschieben des jeweiligen Nockens jeweils eine Nockenkontur aktiv geschaltet werden kann. So kann beispielsweise in einem gewissen Umfangsbereich eines Nockens das Ventil durch Aktivierung eines Nullhubnockenabschnitts geschlossen bleiben oder durch Aktivierung eines Teilhubes das Einlassventil kurzzeitig geöffnet werden. Das kurzzeitige Öffnen im Teilhubbetrieb kann dann als bedarfsweise zuschaltbares Event betrachtet werden.
Gemäß dem erfindungsgemäßen Verfahren wird mit geeigneten Mitteln der Ladedruck zumindest teilweise in einem Anpasszeitraum erhöht, wobei der Anpasszeitraum zumindest teilweise zeitlich vor einem Schaltvorgang liegt, durch welchen die IAGR-Rate in Folge des Schaltvorgangs in den teilaktiverten oder deaktivierten Zustand einen Sprung aufweist.

In Ergänzung dazu kann gemäß Anspruch 2 mit geeigneten Mitteln der Ladedruck zumindest teilweise in einem Anpasszeitraum reduziert werden, wobei der Anpasszeitraum zumindest teilweise zeitlich nach einem Schaltvorgang liegt, durch welchen die IAGR-Rate in Folge des Schaltvorgangs in den aktivierten Zustand einen steigenden Verlauf aufweist.

Mit dem Ladedruck ist der Druck gemeint, welcher in dem Einlasskanal stromaufwärts des Brennraums herrscht. Der Ladedruck steht in unmittelbarem Zusammenhang mit dem Spüldruckgefälle, wobei unter dem Spüldruckgefälle die Differenz zwischen Ladedruck und Abgasgegendruck verstanden wird. Als Abgasgegendruck wird der Druck in dem Auslasskanal stromabwärts des Brennraums bezeichnet. Je höher der Ladedruck ist, desto mehr Frischluft und ggf. extern rückgeführtes Abgas kann in den Einlasskanal gefördert werden.

Wie bereits vorstehend erläutert, setzt sich die Abgasrückführrate aus der IAGR-Rate und der EAGR-Rate zusammen. Bei einer diskreten Schaltung (d.h. einer Aktivierung oder Teildeaktivierung bzw. Deaktivierung, z.B. durch Verstellung eines Schiebenockens von einem Nullhub-Modus in einen Teilhub-Modus) der IAGR kommt es dazu, dass die IAGR-Rate sprunghaft ansteigt oder abfällt, ohne dass die EAGR-Rate entsprechend schnell gegengesteuert werden kann. Es kommt in Folge des sprunghaften Verhaltens der IAGR-Rate zu einer peakartigen Überhöhung oder Reduzierung der gesamten Abgasrückführrate und damit kurzzeitig zu einer nicht-idealen Gaszusammensetzung im Brennraum, was einen kurzzeitig erhöhten Schadstoffausstoß zur Folge hat. Mit dem erfindungsgemäßen Verfahren wird das Ziel verfolgt, die Abweichung der Abgasrückführrate von einer konstanten Soll-Abgasrückführrate zu verringern und die Zeit bis zur Wiederherstellung der Soll-AGR-Rate zu verkürzen, um so weniger Emissionen zu verursachen.

Nur beispielhaft wird darauf verwiesen, dass die Soll-Abgasrückführrate beispielsweise auf einen Wert unter 30 Prozent festgesetzt werden kann, beispielsweise auf 20 Prozent. Das Soll-Verhältnis zwischen rückgeführtem Abgas und Frischluft beträgt dann 1:4.

Gemäß Anspruch 1 wird der Ladedruck mit geeigneten Mitteln in einem Anpasszeitraum erhöht, der zeitlich vor einem Schaltvorgang zur Deaktivierung der IAGR liegt. Auch in diesem Fall erfolgt die Erhöhung insbesondere kontinuierlich, linear, exponentiell oder anders - aber insbesondere im mathematischen Sinne stetig. Der Anpasszeitraum liegt vorzugsweise zumindest teilweise unmittelbar vor dem Schaltvorgang, insbesondere so, dass sich die Erhöhung bis zu dem Schaltvorgang erstreckt. Durch die Erhöhung des Ladedrucks strömt mehr rückgeführtes externes Abgas über das Einlassventil in den Brennraum und es wird weniger Abgas über das Auslassventil in den Brennraum zurückgeführt, so dass die IAGR-Rate sinkt. Die IAGR-Rate wird durch den Ladedruck insbesondere so gesteuert, dass sie kontinuierlich bis zu dem Schaltvorgang auf einen Minimalwert null oder nahe an null absinkt und in dem gleichen Zeitraum die EAGR-Rate vor dem Schaltvorgang einen ansteigenden Verlauf aufweist. Durch die Reduzierung des Ladedrucks wird der Anstieg der EAGR-Rate zeitlich vor den Schaltvorgang vorverlagert und erstreckt sich so über einen längeren Zeitraum, d.h. ist im Vergleich zum Stand der Technik "gestreckt".

Zur Anpassung der AGR-Rate an die Soll-AGR-Rate gemäß Anspruch 2 wird der Ladedruck in einem Anpasszeitraum reduziert. Der Anpasszeitraum gemäß Anspruch 2 beginnt vorzugsweise unmittelbar mit dem Schaltvorgang. Ein solcher Schaltvorgang geht üblicherweise mit einem sprunghaften Anstieg der IAGR-Rate einher. Gemäß dem erfindungsgemäßen Verfahren erfolgt ebenfalls ein sprunghafter Anstieg der IAGR-Rate, allerdings in reduzierter Höhe, und es folgt dann ein weiterer, kontinuierlicher Anstieg der IAGR-Rate bis zu einem Maximum. In dieser Anstiegsphase wird der Ladedruck kontinuierlich, linear, exponentiell oder anders - aber insbesondere im mathematischen Sinne stetig - über den Anpasszeitraum reduziert. Durch die Reduzierung des Ladedrucks strömt nur eine geringere Menge an Frischluft und EAGR über das geöffnete Einlassventil in den Brennraum ein. Entsprechend erhöht sich der Anteil des intern zurückgeführten Abgases an dem Gemisch, was zu einer Erhöhung der IAGR-Rate führt. Mittels der Reduzierung des Ladedrucks über den Anpasszeitraum kann die interne Abgasrückführrate so - abgesehen von dem erwähnten anfänglichen Sprung bzw. einer anfänglichen Unstetigkeit - kontinuierlich und ungefähr gleichmäßig bis zu einem Maximalwert ansteigend verlaufen und ist dann derart angepasst, dass eine entsprechend abfallende EAGR-Rate kompensiert wird.

Insgesamt kann durch das erfindungsgemäße Verfahren die Abweichung der AGR-Rate von der Soll-AGR-Rate in einem durch den Schaltvorgang bedingten Anpasszeitraum reduziert werden, wodurch der Schadstoffausstoß reduziert wird.

Vorzugsweise werden im Betrieb einer Brennkraftmaschine sowohl Anspruch 2 als auch Anspruch 1 realisiert, so dass sich jeweils bei einem Schaltvorgang zwischen aktivierter und teilaktivierter IAGR bzw. aktivierter und deaktivierter IAGR ein verringerter Schadstoffausstoß ergibt.

Der Anpasszeitraum, in welchem der Ladedruck verändert wird, ist deutlich länger als die Dauer des Schaltvorgangs. Ein Schaltvorgang ist innerhalb von 1-2 Kurbelwellenumdrehungen abgeschlossen, während sich der Anpasszeitraum über eine Vielzahl von Kurbelwellenumdrehungen erstreckt. Es stehen somit Zeiträume von weniger als einer Sekunde (Schaltvorgang) und von mehreren Sekunden (Anpasszeitraum) gegenüber. Dabei ist zu berücksichtigen, dass der Anpasszeitraum insbesondere in Verbindung mit dem erfindungsgemäßen Verfahren auch schon zeitlich vor dem Schaltvorgang beginnen kann und sich üblicherweise bis zu einem Zeitpunkt nach dem Schaltvorgang erstreckt.

In einer praktischen Ausführungsform des erfindungsgemäßen Verfahrens wird als Mittel zur Reduzierung oder Erhöhung des Ladedrucks im Anpasszeitraum ein Verdichter verwendet. Damit sind insbesondere Verdichter gemeint, die von der Drehzahl der Brennkraftmaschine und/oder von einer Abgasturbine unabhängig antreibbar sind. Dazu kann insbesondere ein elektrisch und/oder mechanisch angetriebener Verdichter eingesetzt werden. Mittels des Verdichters kann der Ladedruck im Einlasskanal stromaufwärts des Brennraums gemäß Anspruch 2 reduziert bzw. gemäß Anspruch 1 temporär erhöht werden, um das Spüldruckgefälle vorteilhaft zu beeinflussen und so wie vorstehend beschrieben die Emissionen zu reduzieren.

Bei dem separat eintreibbaren Verdichter kann es sich um einen speziell gestalteten Verdichter eines Abgasturboladers handeln, der über einen separaten Antrieb zusätzlich zur Abgasturbine verfügt. Alternativ oder in Ergänzung dazu kann ein separater Verdichter in einer Ansaugstrecke angeordnet sein, insbesondere ein elektrischer Verdichter. Mit dem Begriff Ansaugstrecke ist in diesem Zusammenhang der gesamte Bereich einer Brennkraftmaschine gemeint, über welchen Frischluft durch eine Ansaugleitung zum Saugrohr und zum Einlasskanal in Richtung Brennraum gefördert wird, wobei die Anordnung eines zusätzlichen Verdichters insbesondere stromabwärts einer Mündungsstelle einer externen Abgasrückführleitung vorgesehen ist. Der zusätzliche Verdichter kann stromaufwärts oder stromabwärts einer Drosselklappe in der Ansaugstrecke angeordnet sein.

Ein erfindungsgemäßes Verfahren kann besonders energieeffizient betrieben werden, wenn der Ladedruck in einem Zeitraum vor der Reduzierung gemäß Anspruch 2 und insbesondere vor dem entsprechenden Schaltvorgang erhöht wird und/oder der Ladedruck in einem auf eine Erhöhung gemäß Anspruch 1 folgenden Zeitraum, insbesondere beginnend mit dem entsprechenden Schaltvorgang, wieder reduziert wird. Mit anderen Worten ausgedrückt, erfolgt die Erhöhung des Ladedrucks dabei vorzugsweise von einem Basis-Ladedruckniveau aus bzw. die Reduzierung erfolgt auf ein Basis-Ladedruckniveau zurück. Das Basis-Ladeniveau entspricht insbesondere dem Ladedruckniveau ohne das zusätzliche Mittel, insbesondere ohne einen extern angetriebenen Verdichter. Diese Ausführungsform eignet sich besonders, wenn als Mittel ein Verdichter eingesetzt wird. Ein extern angetriebener Verdichter hat den Vorteil, dass dieser bedarfsweise aktivierbar ist, insbesondere während und unmittelbar vor und nach einem Schaltvorgang. Dementsprechend muss ein solcher Verdichter auch nur dann bedarfsweise mit Energie versorgt werden. In den anderen Phasen, das heißt zeitlich beabstandet von den Schaltvorgängen, kann der Verdichter deaktiviert sein.

Der Zeitraum zur Erhöhung des Ladedrucks gemäß Anspruch 1 wird für das erfindungsgemäße Verfahren insbesondere so gewählt, dass der von dem Mittel bereitgestellte Ladedruck zum Zeitpunkt des Schaltvorgangs mindestens 5 Prozent, weiter bevorzugt mindestens 10 Prozent, mindestens 15 Prozent oder mindestens 20 Prozent. Je nach Funktion und Typ eines Verdichters, der zur Ladedruckerhöhung eingesetzt wird, kann der von dem Mittel bereitgestellte Ladedruck auch bereits 80 Prozent des maximal bereitstellbaren Ladedrucks betragen. Vorzugsweise hat sich zum Zeitpunkt des Schaltvorgangs ein Ladedruck aufgebaut, der mindestens 90 Prozent und weiter vorzugsweise mindestens 95 Prozent und besonders bevorzugt 100 Prozent des maximal bereitstellbaren Ladedrucks entspricht. Bei dem Mittel zur Bereitstellung des Ladedrucks kann es sich insbesondere um einen Verdichter oder wie nachfolgend noch erläutert, um eine Drosselklappe handeln. Ein Aufbau des Ladedrucks von 5 Prozent oder 10 Prozent hat sich als bereits vorteilhaft erwiesen, um die IAGR-Rate soweit zu reduzieren, dass der Sprung während des Schaltvorgangs nur noch gering ist und die Menge an emittierten Schadstoffen dementsprechend bereits deutlich absinken.

In einer weiteren praktischen Ausführungsform des erfindungsgemäßen Verfahrens wird die IAGR-Rate zumindest in einem sich unmittelbar vor dem Schaltvorgang erstreckenden Zeitraum gemäß Anspruch 1 in dem Maße reduziert, in welchem die EAGR-Rate in dem gleichen Zeitraum erhöht wird, so dass die sich durch Addition der IAGR-Rate und der EAGR-Rate ergebende (Gesamt-) Ist-Abgasrückführrate ungefähr konstant gehalten wird. Wie bereits vorstehend erläutert, bewirkt eine konstante AGR-Rate, welche insbesondere der Soll-AGR-Rate entspricht, eine optimale Gaszusammensetzung, wodurch ein temporär erhöhter Schadstoffausstoß vermieden wird.

Die Reduzierung des Ladedrucks gemäß Anspruch 2 und/oder die Erhöhung des Ladedrucks gemäß Anspruch 1 wird in einer weiteren Ausführungsform des erfindungsgemäßen Verfahrens insbesondere vollständig oder teilweise durch Steuerung der Drosselklappe der Brennkraftmaschine bewirkt. Dabei kann die Drosselklappe alternativ oder in Ergänzung zu einem Verdichter oder anderen Mitteln oder in Ergänzung zur Veränderung des Betriebszustandes der Brennkraftmaschine, wie Mitteldruck und/oder Drehzahl eingesetzt werden. Mit Hilfe der Drosselklappe kann der Ladedruck in dem Einlasskanal variiert werden, indem der Durchlassquerschnitt verändert wird. Je größer der Durchlassquerschnitt eingestellt wird desto größer ist der Ladedruck, durch Anstellen der Drosselklappe kann der Ladedruck verringert werden.

Wenn nur die Drosselklappe zur Ausführung des erfindungsgemäßen Verfahrens verwendet wird, ist in einem aktivierten Zustand der IAGR die Drosselklappe angedrosselt, d.h. teilweise geschlossen.

Ein Schaltvorgang gemäß Anspruch 2 und/oder gemäß Anspruch 1 wird insbesondere dann veranlasst, wenn eine bestimmte vorgegebene Lastschwelle der Brennkraftmaschine erreicht ist. Insbesondere kann in Bereichen, in welchen die Brennkraftmaschine mit Niedriglast betrieben wird, die IAGR aktiviert werden und im Hochlastbetrieb deaktiviert werden. Bei einer Deaktivierung der IAGR wird der Brennraum ausschließlich mit Frischluft und ggf. mit rückgeführtem Abgas befüllt. Der Lastzustand der Brennkraftmaschine wird insbesondere durch die Drehzahl und den Mitteldruck bzw. das angeforderte Drehmoment bestimmt. Im Niedriglastbetrieb wird vorzugsweise internes Abgas in den Brennraum zurückgeführt, da dieses eine höhere Temperatur aufweist als externes rückgeführtes Abgas und so einem unerwünschten Abkühlen der Zylinder der Brennkraftmaschine entgegengewirkt wird.

Alternativ oder in Ergänzung dazu kann ein Schaltvorgang in Abhängigkeit der Temperatur der Brennkraftmaschine veranlasst werden. Insbesondere in Zuständen, in denen die Brennkraftmaschine noch nicht ihre optimale Betriebstemperatur erreicht hat, wie unmittelbar nach dem Start, kann eine interne Abgasrückführung aktiviert werden, um ein schnelleres Aufheizen der Zylinder der Brennkraftmaschine zu bewirken. Ist eine bestimmte Temperaturschwelle erreicht, so kann die interne Abgasrückführung deaktiviert oder reduziert werden, und die Abgasrückführrate wird ausschließlich oder überwiegend über die externe Abgasrückführung gesteuert. Als relevante Temperatur für dieses Verfahren kann insbesondere die Temperatur der Zylinder der Brennkraftmaschine, die Öltemperatur und/oder die Temperatur des Abgases in einem Abgasnachbehandlungssystem verwendet werden.

Ein besonders positiver Effekt auf die Steuerung der Abgasrückführrate ergibt sich, wenn der Ladedruck gemäß Anspruch 2 um mindestens 50 mbar reduziert und/oder gemäß Anspruch 1 um mindestens 50 mbar erhöht wird. Vorzugsweise wird der Ladedruck um mindestens 100 mbar und weiter vorzugsweise um mindestens 120 mbar erhöht bzw. reduziert. Bei einer Erhöhung bzw. Reduzierung des Ladedrucks in diesem Umfang wurden bereits deutliche Emissionsvorteile erzielt. Vorteilhaft ist, dass eine derartige Erhöhung bzw. Reduzierung in dem genannten Umfang von einem in manchen Kraftfahrzeugen und/oder Brennkraftmaschinen bereits vorhandenen Verdichter bereit gestellt werden können, so dass in diesem Fall die Erfindung durch Implementierung einer geeigneten Steuerung umsetzbar ist. Das gleiche gilt für die Realisierung mittels der Drosselklappe einer Brennkraftmaschine.

Die Erfindung betrifft auch eine Brennkraftmaschine mit einer Steuereinheit zur Durchführung eines wie vorstehend beschriebenen Verfahrens. Die Steuereinheit ist insbesondere mit einem Drehzahlsensor und/oder einem Temperaturmesser im Bereich des Brennraums oder im Bereich einer Abgasnachbehandlungsanlage mit einer diskreten Schaltvorrichtung zur Schaltung der IAGR sowie mit den geeigneten Mitteln zur Anpassung des Ladedrucks funktional gekoppelt. Als geeignete Mittel kommen vorzugsweise ein Verdichter und/oder eine Drosselklappe in Frage. Mittels der Steuereinheit sind vor, während und/oder nach einem Schaltvorgang die geeigneten Mittel ansteuerbar, um eine zusätzliche Erhöhung bzw. Reduzierung des Ladedrucks veranlassen zu können.

Weitere Ausführungsformen der Erfindung sind nachfolgend im Zusammenhang mit den Zeichnungen beschrieben. Es zeigen:
- Fig. 1: eine schematische Skizze des Aufbaus einer erfindungsgemäßen Brennkraftmaschine mit den vorhandenen Strömungspfaden,
- Fig. 2: Ventilhubkurven der Brennkraftmaschine aus Fig. 1,
- Fig. 3: eine qualitative Darstellung erfindungsrelevanter Größen bei einer Deaktivierung einer IAGR für die Brennkraftmaschine aus Fig. 1,
- Fig. 4: eine qualitative Darstellung erfindungsrelevanter Größen bei einer Aktivierung der IAGR für die Brennkraftmaschine aus Fig. 1,
- Fig. 5: eine qualitative Darstellung erfindungsrelevanter Größen bei einer Deaktivierung der IAGR einer Brennkraftmaschine, und
- Fig. 6: eine qualitative Darstellung erfindungsrelevanter Größen bei einer Aktivierung der IAGR einer Brennkraftmaschine.

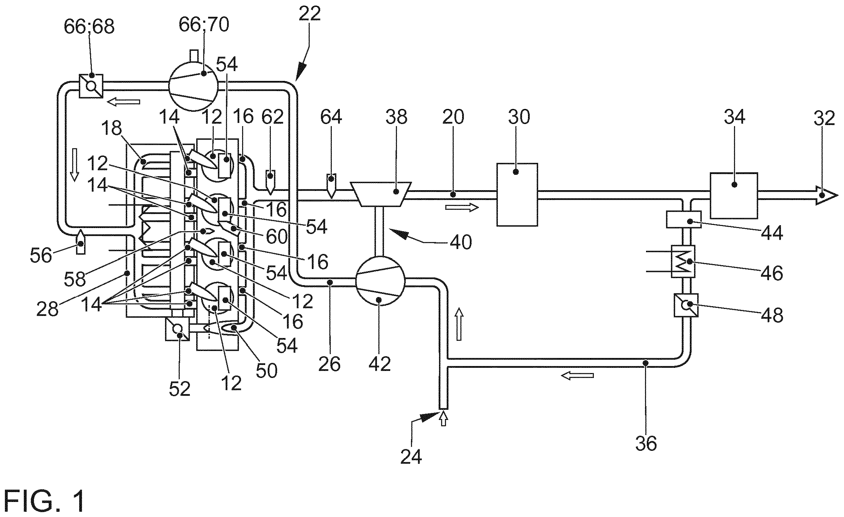

In Fig. 1 ist eine erfindungsgemäße Brennkraftmaschine 10 dargestellt. Bei der Brennkraftmaschine 10 sind vier Brennräume 12 vorgesehen, wobei die Brennräume 12 jeweils zwei Einlassventile (nicht dargestellt) aufweisen, die im geöffneten Zustand jeweils einen Einlasskanal 14 mit dem Brennraum 12 verbinden. Ferner weisen die Brennräume 12 jeweils mindestens ein Auslassventil (nicht dargestellt) auf, welches im geöffneten Zustand den jeweiligen Brennraum 12 mit einem Auslasskanal 16 verbindet. Der Einlasskanal 14 ist strömungsleitend mit einem Saugrohr 18 verbunden. Der Auslasskanal 16 ist strömungsleitend mit einer Abgasleitung 20 verbunden.

In einer Ansaugstrecke 22, welche sich von einer Ansaugstelle 24 für Frischluft über eine Ansaugleitung 26 bis hin zu dem Saugrohr 18 und dem Einlasskanal 14 erstreckt, ist ein Ladeluftkühler 28 angeordnet.

In der Abgasleitung 20 ist eine optionale Abgasnachbehandlungsanlage 30 in Form eines hier nur schematisch dargestellten Filters und Katalysators angeordnet. Von der Abgasleitung 20 wird Abgas durch einen weiteren Katalysator 34 in Richtung des Pfeils 32 über eine nicht dargestellte Auspuffanlage in die Atmosphäre geleitet. Vor dem Katalysator 34 zweigt eine Niederdruck-Abgasrückführleitung 36 von der Abgasleitung 20 ab, welche in die Ansaugleitung 26 mündet.

In der Abgasleitung 20 ist eine Turbine 38 eines Abgasturboladers 40 angeordnet, welche einen Verdichter 42 des Abgasturboladers 40 antreibt, der in der Ansaugleitung 26 angeordnet ist.

Die Niederdruck-Abgasrückführleitung 36 ist für die Bereitstellung einer Niederdruck-Abgasrückführung vorgesehen. Dabei wird Abgas nach dem Ausströmen aus dem Brennraum 12 stromabwärts der Turbine 38 des Abgasturboladers 40 entnommen und stromaufwärts des Verdichters 42 des Abgasturboladers 40 der Ansaugstrecke 22 wieder zugeführt. In der Niederdruck-Abgasrückführleitung 36 sind ein Filter 44, ein Kühler 46 und ein Ventil 48 angeordnet.

Neben der Niederdruck-Abgasrückführung weist die Brennkraftmaschine 10 außerdem eine Hochdruck-Abgasrückführung auf, wobei Abgas, welches aus den Brennräumen 12 ausgestoßen wurde, über eine Hochdruck-Abgasrückführleitung 50 stromaufwärts der Turbine 38 des Abgasturboladers 40 entnommen wird und stromabwärts des Verdichters 42 des Abgasturboladers 40 der Ansaugstrecke 22 wieder zugeführt wird. Der Volumenstrom bzw. Massenstrom durch die Hochdruck-Abgasrückführung kann mittels eines Ventils 52 gesteuert werden.

Sowohl die Niederdruck-Abgasrückführung als auch die Hochdruck-Abgasrückführung sind externe Abgasrückführungen. Die externe Abgasrückführrate setzt sich in der gezeigten Ausführungsform der Brennkraftmaschine 10 aus einer Niederdruck-EAGR-Rate und einer Hochdruck-EAGR-Rate zusammen.

Die Brennkraftmaschine 10 weist zudem eine Schaltvorrichtung 54 für die Steuerung der internen Abgasrückführung auf, mit welcher zwischen diskreten Schaltzuständen hin und her geschaltet werden kann. Die diskrete Schaltvorrichtung 54 ist vorliegend nur schematisch dargestellt und ist insbesondere derart ausgebildet, dass sie in bekannter Art und Weise mehrere Schiebenocken umfasst, die jeweils beispielsweise zwischen einer Variante mit einem Nullhub und einem Teilhub des Nockens über einen gewissen Umfangsabschnitt schaltbar sind. Der Teilhub ist vorgesehen, um ein bedarfsweises Öffnen des Auslassventils für eine IAGR zu bewirken. Mit der Schaltvorrichtung 54 ist die interne Abgasrückführung so in zwei diskreten Stufen zwischen einem aktivierten Zustand (Teilhubbetrieb) und einem deaktivierten Zustand (Nullhubbetrieb) schaltbar. Bei aktivierter interner Abgasrückführung gelangt aus dem Brennraum 12 bereits ausgestoßenes Abgas durch das geöffnete Auslassventil bei geeigneten Druckverhältnissen wieder zurück in den Brennraum 12.

Ferner sind mehrere Sensoren vorgesehen, die den Zustand der Brennkraftmaschine 10 überwachen. Die gezeigte Brennkraftmaschine 10 umfasst einen Drucksensor 56 zur Bestimmung des Drucks im Saugrohr 18, einen Drehzahlmesser 58, ein oder mehrere Drucksensoren 60 zur Erfassung des Drucks im Brennraum 12 (hier ist exemplarisch nur ein Drucksensor 60 dargestellt), eine Lambda-Sonde 62 und einen Drucksensor 64 zur Bestimmung des Drucks in der Abgasleitung 20. Es wird darauf hingewiesen, dass alternativ oder zusätzlich auch mehrere Temperatursensoren vorgesehen sein können, die hier nicht gezeigt sind.

In der Ansaugleitung 26 ist als ein Mittel 66 zur Variation des Ladedrucks eine Drosselklappe 68 angeordnet. Zudem ist in der gezeigten Ausführungsform der Brennkraftmaschine 10 zusätzlich als weiteres Mittel 66 ein elektrisch angetriebener Verdichter 70 in der Ansaugleitung 26 vorgesehen, welcher stromaufwärts der Drosselklappe 68 angeordnet ist.

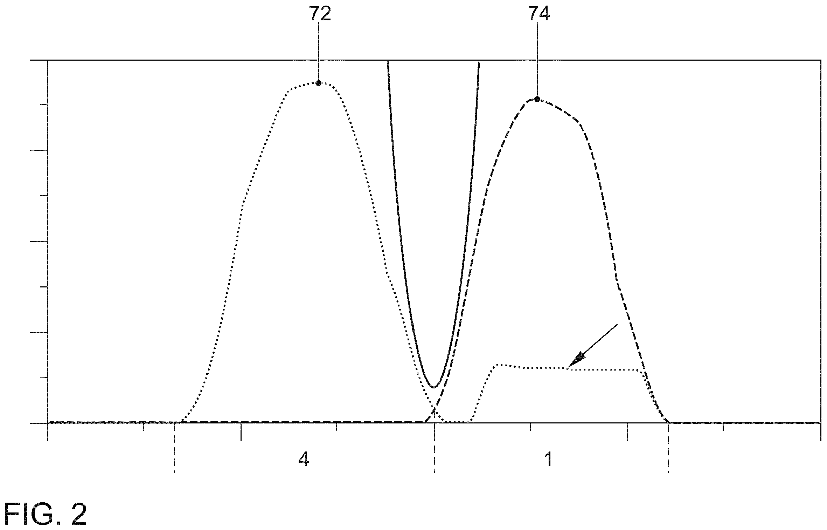

In Verbindung mit den Fig. 2 bis Fig. 6 werden im Folgenden verschiedene Ausführungsformen erfindungsgemäßer Verfahren erläutert.

In Fig. 2 sind eine Ventilhubkurve 72 des Auslassventils und eine Ventilhubkurve 74 des Einlassventils 2 dargestellt. In den hier gezeigten Takten ist links der üblicherweise als 4. Takt bezeichnete Takt eines Viertaktmotors dargestellt, in dem ein Auslassventil mit Vollhub geöffnet ist und ein Ausstoßen des Abgases aus dem Brennraum erfolgt. Der hier rechts als zweites dargestellte Takt entspricht dem als 1. Takt bezeichneten Takt eines Viertaktmotors, wobei in einer Ansaugphase das Einlassventil mit Vollhub geöffnet ist.

Wenn die interne Abgasrückführung mittels der Schaltvorrichtung aktiviert ist, öffnet auch das Auslassventil bei geöffnetem Einlassventil in der Ansaugphase (1. Takt) mit Teilhubbetrieb (*second event*). Der Abschnitt der Auslassventilkurve 72, in welchem das Auslassventil für die interne Abgasrückführung in der Ansaugphase mit Teilhub geöffnet ist, ist in Fig. 2 mit einem Pfeil gekennzeichnet. Die so aktivierte interne Abgasrückführung erstreckt sich dann in der Regel über eine Vielzahl von aufeinanderfolgenden Zyklen der Brennkraftmaschine, bis der interne Abgasrückführungsmodus wieder deaktiviert wird.

Abhängig von der Temperatur der Brennkraftmaschine und/oder der Lastanforderung der Brennkraftmaschine, wird mittels der Schaltvorrichtung die interne Abgasrückführung aktiviert oder deaktiviert, indem die gewünschte Nockenkontur eines Schiebenockens mit zwei alternativ aktiverbaren Konturen (z.B. Nullhub/Teilhub) aktiv geschaltet wird.

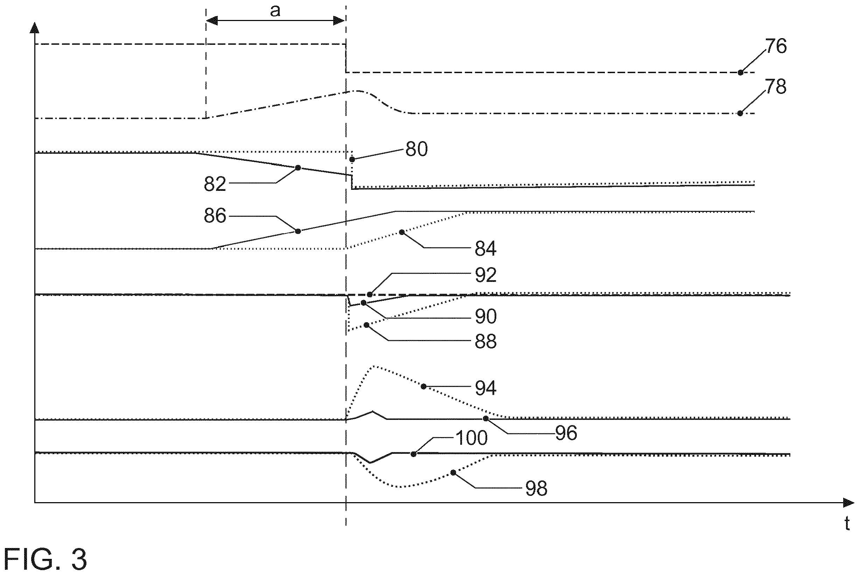

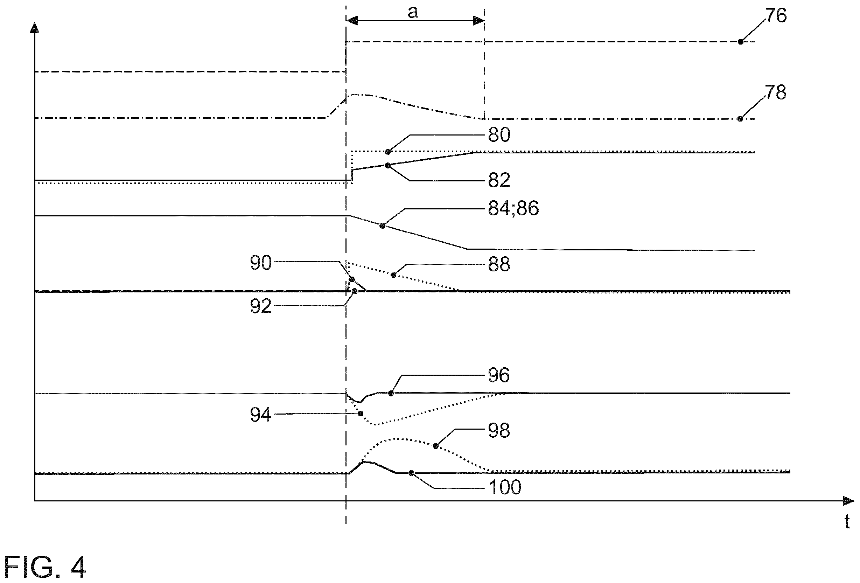

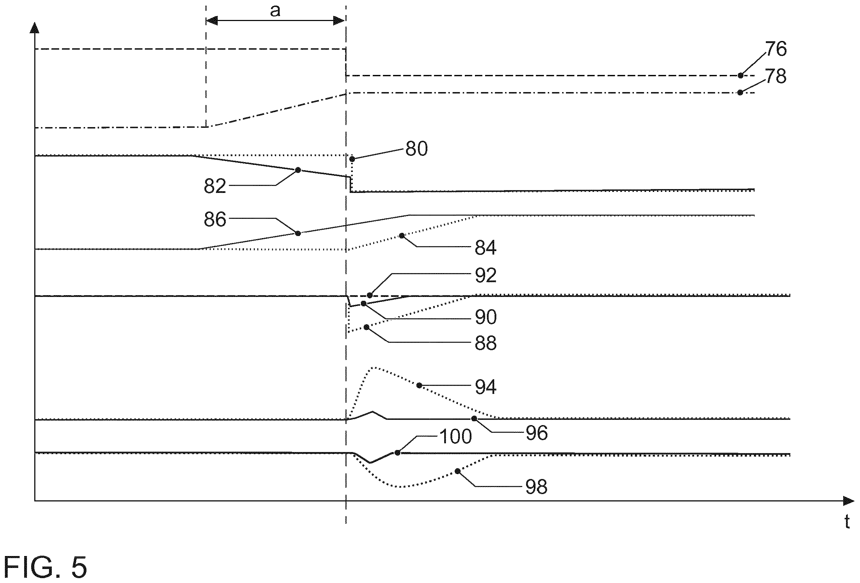

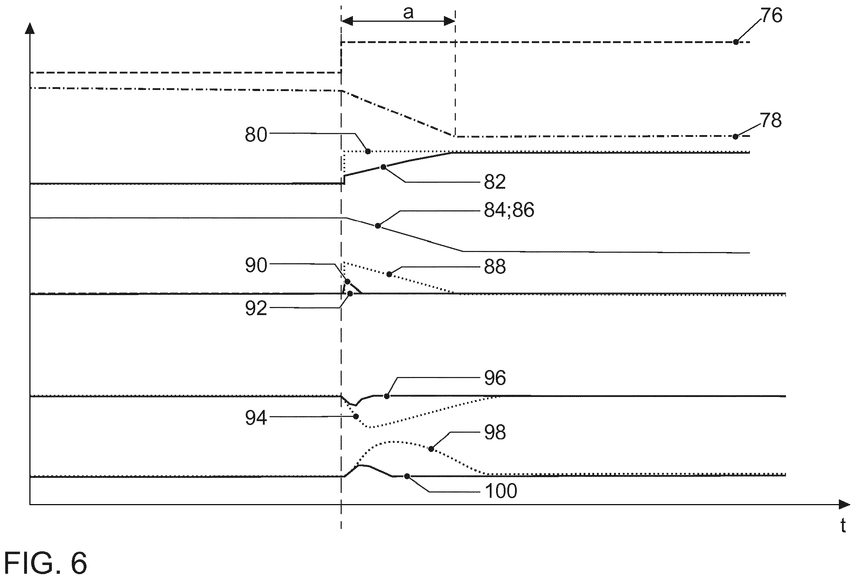

In den Fig. 3 bis 6 sind folgende Größen jeweils schematisch über die Zeit t dargestellt:
- Mit der Kurve 76 ist dargestellt, ob die IAGR aktiv (oberes Linienniveau) oder inaktiv (unteres Linienniveau) ist.
- Die Kurve 78 stellt das Niveau des Ladedrucks qualitativ dar. Dieser wird in den Fig. 3 und 4 durch den externen elektrisch angetriebenen Verdichter 70 bereitgestellt, in den Fig. 5 und 6 durch Steuerung der Drosselklappe 68.
- Die Kurven 80, 82 bilden die IAGR-Rate ab. Dabei stellt die gepunktete Linie 80 die IAGR-Rate dar, welche sich ohne Anpassung des Ladedrucks ergeben hätte und die durchgezogene Linie 82 die IAGR-Rate, welche sich durch ein erfindungsgemäßes Verfahren ergibt.
- Die Kurven 84, 86 repräsentieren die EAGR-Raten, wobei auch hier gilt, dass die gepunktete Linie 84 die EAGR-Rate ohne Anpassung des Ladedrucks und die durchgezogene Linie 86 die EAGR-Rate mit einer erfindungsgemäßen Brennkraftmaschine mit Anpassung des Ladedrucks dargestellt.
- Die Kurven 88, 90, 92 zeigen die Ist-Abgasrückführrate (Ist-AGR-Rate), wobei die gestrichelte Linie 92 die Soll-AGR-Rate repräsentiert, die im Optimalfall im Brennraum vorliegt. Die gepunktete Linie 88 stellt die Ist-AGR-Rate gemäß Stand der Technik dar, welche sich für eine Brennkraftmaschine ohne ein erfindungsgemäßes Verfahren ergibt und die durchgezogene Linie 90 die Ist-AGR-Rate, welche sich für eine Brennkraftmaschine mit Anwendung eines erfindungsgemäßen Verfahrens ergibt.
- Die Kurven 94, 96 zeigen den Verlauf der Stickoxidemissionen und die Kurven 98, 100 den Verlauf der Rußemission, jeweils bei einem Verfahren gemäß Stand der Technik (Kurve 94) und bei einem erfindungsgemäßen Verfahren (Kurve 96).

In Fig. 3 ist der Fall dargestellt, dass eine interne Abgasrückführung ausgehend von einem aktivierten Zustand durch einen diskreten Schaltvorgang (Umschalten eines Schiebenockens) deaktiviert wird (vgl. Kurve 76).

Betrachtet man zunächst nur die gepunktet ausgeführten Kurven der IAGR-Rate 80, der EAGR-Rate 84 und der (Gesamt-) Ist-AGR-Rate 88, so ist gut erkennbar, dass bei einer diskreten Schaltung von einem aktivierten IAGR-Zustand zu einem deaktivierten IAGR-Zustand die IAGR-Rate 80 sprunghaft abfällt. Dies führt gleichermaßen dazu, dass die Ist-AGR-Rate 88, welche sich durch Addition der IAGR-Rate 80 mit der EAGR-Rate 84 ergibt, ebenfalls sprunghaft absinkt. Daraus resultieren die dargestellten Peaks bei der Stickoxidemission 94 und der Rußemission 98.

Betrachtet man nun die durchzogenen Linien, welche schematisch das jeweilige erfindungsgemäße Verfahren repräsentieren, ist erkennbar, dass der Ladedruck 78, welcher hier durch einen elektrisch angetriebenen Verdichter 70 erzeugt wird, erfindungsgemäß schon vor dem diskreten Schaltvorgang über einen Anpasszeitraum a kontinuierlich und linear erhöht wird. Zum Zeitpunkt des Schaltens beträgt der Ladedruck 78 hier etwa 10 % des maximal bereitstellbaren Ladedrucks. Die IAGR-Rate 82 wird durch den steigenden Ladedruck 78 über den Anpasszeitraum a langsam reduziert und gleichzeitig steigt die EAGR-Rate 86 bereits vor dem Schaltvorgang an. Die IAGR-Rate 82 wird vorliegend bis zu dem Schaltzeitpunkt zwar nicht auf null, aber gegenüber dem Stand der Technik deutlich reduziert, so dass sich im Gegensatz zum vorherigen Verfahren nur ein kleiner Sprung ergibt, der sich auch zeitlich weniger lang erstreckt. Dementsprechend ist auch der Sprung in der (Gesamt-) Ist-AGR-Rate 90 und damit die Abweichung der AGR-Rate 90 von der Soll-AGR-Rate 92 geringer. Auch die Stickoxidemission 96 kann so reduziert werden.

Nach der Deaktivierung der IAGR (vgl. Kurve 76) in der rechten Hälfte der Figur 3, wird der Ladedruck 78 wieder auf null reduziert. Nach der Deaktivierung ist das Auslassventil geschlossen und die IAGR-Rate 82 wird auf null heruntergefahren. Die EAGR-Rate 86 steigt wieder bis zu einem Maximum.

In Fig. 4 ist die Aktivierung der IAGR (Kurve 76) dargestellt, d.h. die IAGR ist in der linken Hälfte der Figur zunächst deaktiviert und wird dann durch Verstellung des Schiebenockens in den Teilhubbetrieb aktiviert.

Bei der Aktivierung der IAGR steigt die IAGR-Rate 80 ohne Anwendung des erfindungsgemäßen Verfahrens sprunghaft an, womit ebenfalls die (Gesamt-) Ist-AGR-Rate 88 sprunghaft ansteigt und erheblich von der Soll-AGR-Rate 92 abweicht. Gleichfalls verringern sich zwar die Stickoxidemissionen 94, aber die Rußemissionen 98 nehmen zu.

Wie in Fig. 4 erkennbar ist, wird der Ladedruck 78 mittels des elektrisch angetriebenen Verdichters 70 nach dem Schalten in den aktivierten Zustand erfindungsgemäß langsam kontinuierlich und linear über einen Anpasszeitraum a reduziert. Dadurch wird ebenfalls die IAGR-Rate 82 nur langsam erhöht, und gleichzeitig wird die Erhöhung der IAGR-Rate 82 durch eine fallende EAGR-Rate 86 kompensiert. Insgesamt entspricht damit die (Gesamt-) Ist-AGR-Rate 90 der Soll-AGR-Rate 92 mit nur geringen Abweichungen. Die Rußemissionen 100 können so signifikant reduziert werden.

Vor einer Aktivierung der IAGR wird der Ladedruck 78 zunächst derart erhöht, dass er unmittelbar nach Abschluss des Schaltvorgangs den Wert des maximal bereitstellbaren Ladedrucks aufweist. Im Anschluss an die Aktivierung bzw. an den Schaltvorgang wird der Ladedruck 78 wieder auf null reduziert.

Der Anpasszeitraum a erstreckt sich dabei in Fig. 3 und Fig. 4 über einen längeren Zeitraum als der Schaltvorgang selbst.

In Fig. 5 und Fig. 6 ist jeweils eine Deaktivierung und einer Aktivierung der IAGR dargestellt (vgl. Kurve 76). Im Unterschied zu den Fig. 3 und Fig. 4 wird der Ladedruck 78 in dieser Ausführungsform durch die Drosselklappe in der Ansaugleitung variiert. Die übrigen Kurven sind identisch zu den in Fig. 3 und 4 gezeigten Kurven, so dass im Folgenden nur auf die Unterschiede eingegangen wird.

In Fig. 5 ist erkennbar, dass der Ladedruck 78 in dem Anpasszeitraum a bereits vor dem Schaltvorgang kontinuierlich angehoben wird, in dem die Drosselklappe ausgehend von einem angedrosselten Zustand weiter geöffnet wird. Während des aktivierten Zustands bleibt die Drosselklappe vollständig geöffnet bzw. in dem weniger gedrosselten Zustand mit erhöhtem Ladedruckniveau.

Bei einer in Fig. 6 gezeigten Aktivierung der IAGR (vgl. Kurve 76) hingegen wird die Drosselklappe angestellt, und der Ladedruck 78 wird kontinuierlich und linear über einen Anpasszeitraum a reduziert. Während die IAGR aktiviert ist, bleibt der Ladedruck 78 konstant, indem die Drosselklappe angedrosselt bleibt.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Brennkraftmaschine
- 12: Brennraum
- 14: Einlasskanal
- 16: Auslasskanal
- 18: Saugrohr
- 20: Abgasleitung
- 22: Ansaugstrecke
- 24: Ansaugstelle
- 26: Ansaugleitung
- 28: Ladeluftkühler
- 30: Abgasnachbehandlungsanlage
- 32: Auspuff
- 34: Katalysator
- 36: Niederdruck-Abgasrückführleitung
- 38: Turbine
- 40: Abgasturbolader
- 42: Verdichter
- 44: Filter
- 46: Kühler
- 48: Ventil
- 50: Hochdruck-Abgasrückführleitung
- 52: Ventil
- 54: Schaltvorrichtung
- 56: Drucksensor
- 58: Drehzahlmesser
- 60: Drucksensor
- 62: Lambda-Sonde
- 64: Drucksensor
- 66: Mittel
- 68: Drosselklappe
- 70: Verdichter
- 72: Ventilhubkurve Auslassventil
- 74: Ventilhubkurve Einlassventil
- 76: Umschaltkurve
- 78: Ladedruck
- 80: IAGR-Rate (gemäß Stand der Technik)
- 82: IAGR-Rate (gemäß Erfindung)
- 84: EAGR-Rate (gemäß Stand der Technik)
- 86: EAGR-Rate (gemäß Erfindung)
- 88: Ist-AGR-Rate (gemäß Stand der Technik)
- 90: Ist-AGR-Rate (gemäß Erfindung)
- 92: Soll-AGR-Rate
- 94: Stickoxidemission (gemäß Stand der Technik)
- 96: Stickoxidemission (gemäß Erfindung)
- 98: Rußemission (gemäß Stand der Technik)
- 100: Rußemission (gemäß Erfindung)

## Patentansprüche

1. Verfahren zur Steuerung eines Abgasrückführsystems einer Brennkraftmaschine (10) mit mindestens einem Brennraum (12), wobei der Brennraum (12) mindestens ein Einlassventil aufweist, das im geöffneten Zustand einen Einlasskanal (14) mit dem Brennraum (12) verbindet, wobei der Brennraum (12) mindestens ein Auslassventil aufweist, das im geöffneten Zustand den Brennraum (12) mit einem Auslasskanal (16) verbindet, wobei eine interne Abgasrückführung (IAGR) vorgesehen ist und wobei eine externe Abgasrückführung (EAGR) vorgesehen ist, wobei das Verfahren die Steuerung der Abgasrückführrate (AGR-Rate) betrifft, welche sich zusammensetzt aus einer internen Abgasrückführrate (IAGR-Rate) und einer externen Abgasrückführrate (EAGR-Rate), und wobei die interne Abgasrückführung zumindest in zwei diskreten Stufen zwischen einem aktivierten Zustand und einem teilaktivierten oder deaktivierten Zustand durch einen Schaltvorgang schaltbar ausgebildet ist,
**dadurch gekennzeichnet, dass**
mit geeigneten Mitteln (66) der Ladedruck (78) zumindest teilweise in einem Anpasszeitraum (a) erhöht wird, wobei der Anpasszeitraum (a) zumindest teilweise zeitlich vor einem Schaltvorgang liegt, durch welchen die IAGR-Rate in Folge des Schaltvorgangs in den teilaktiverten oder deaktivierten Zustand einen Sprung aufweist.

2. Verfahren nach dem vorstehenden Anspruch, **dadurch gekennzeichnet, dass** mit geeigneten Mitteln (66) der Ladedruck (78) zumindest teilweise in einem Anpasszeitraum (a) reduziert wird, wobei der Anpasszeitraum (a) zumindest teilweise zeitlich nach einem Schaltvorgang liegt, durch welchen die IAGR-Rate in Folge des Schaltvorgangs in den aktivierten Zustand einen steigenden Verlauf aufweist.

3. Verfahren nach einem der vorstehenden Ansprüche, **dadurch gekennzeichnet, dass** als Mittel (66) zur Reduzierung oder Erhöhung des Ladedrucks (78) im Anpasszeitraum (a) ein Verdichter (42, 70) verwendet wird.

4. Verfahren nach einem der vorstehenden Ansprüche, **dadurch gekennzeichnet, dass** der Ladedruck (78) in einem Zeitraum vor der Reduzierung gemäß Anspruch 2 erhöht wird und/oder dass der Ladedruck (78) in einem auf eine Erhöhung gemäß Anspruch 1 folgenden Zeitraum wieder reduziert wird.

5. Verfahren nach einem der vorstehenden Ansprüche, **dadurch gekennzeichnet, dass** der Zeitraum zur Erhöhung des Ladedrucks (78) gemäß Anspruch 1 so gewählt wird, dass der von dem Mittel (66) bereitgestellte Ladedruck (78) zum Zeitpunkt des Schaltvorgangs mindestens 5 Prozent des maximal bereitstellbaren Ladedrucks beträgt.

6. Verfahren nach einem der vorstehenden Ansprüche, **dadurch gekennzeichnet, dass** die IAGR-Rate zumindest in einem sich unmittelbar vor dem Schaltvorgang erstreckenden Anpasszeitraum (a) gemäß Anspruch 1 in dem Maße reduziert wird, in welchem die EAGR-Rate in dem gleichen Zeitraum erhöht wird, so dass die sich durch Addition der IAGR-Rate und EAGR-Rate ergebende (Gesamt-) Ist-AGR-Rate ungefähr konstant gehalten wird.

7. Verfahren nach einem der vorstehenden Ansprüche, **dadurch gekennzeichnet, dass** die Reduzierung des Ladedrucks (78) gemäß Anspruch 2 und/oder die Erhöhung des Ladedrucks (78) gemäß Anspruch 1 vollständig oder teilweise durch Steuerung der Drosselklappe (68) der Brennkraftmaschine (10) bewirkt wird.

8. Verfahren nach einem der vorstehenden Ansprüche, **dadurch gekennzeichnet, dass** der Schaltvorgang gemäß Anspruch 2 und/oder der Schaltvorgang gemäß Anspruch 1 dann veranlasst wird, wenn eine vorgegebene Lastschwelle der Brennkraftmaschine (10) und/oder eine vorgegebene Temperatur der Brennkraftmaschine (10) und/oder eine vorgegebene Temperatur einer Abgasnachbehandlungsanlage (30) erreicht ist.

9. Verfahren nach einem der vorstehenden Ansprüche, **dadurch gekennzeichnet, dass** der Ladedruck (78) gemäß Anspruch 2 um mindestens 50 mbar reduziert und/oder gemäß Anspruch 1 um mindestens 50 mbar erhöht wird.

10. Brennkraftmaschine mit einer Steuereinheit zur Durchführung eines Verfahrens nach einem der vorstehenden Ansprüche.

## Claims

1. Method for controlling an exhaust gas recirculation system of a combustion engine (10) having at least one combustion chamber (12), wherein the combustion chamber (12) comprises at least one inlet valve which, in the open state, connects an inlet channel (14) to the combustion chamber (12), wherein the combustion chamber (12) comprises at least one outlet valve which, in the open state, connects the combustion chamber (12) to an outlet channel (16), wherein an internal exhaust gas recirculation (IEGR) is provided and wherein an external exhaust gas recirculation (EEGR) is provided, wherein the method relates to the control of the exhaust gas recirculation rate (EGR rate), which is composed of an internal exhaust gas recirculation rate (IEGR rate) and an external exhaust gas recirculation rate (EEGR rate), and wherein the internal exhaust gas recirculation is switchable at least in two discrete stages between an activated state and a partially activated or deactivated state by a switching operation,
**characterized in that**
with suitable means (66), the charging pressure (78) is at least partially increased in an adaptation period (a), wherein the adaptation period (a) is at least partially temporally prior to a switching operation by which the IEGR rate has a jump, as a result of the switching operation, into the partially activated or deactivated state.

2. Method according to the preceding claim, **characterized in that** with suitable means (66), the charging pressure (78) is reduced at least partially in an adaptation period (a), wherein the adaptation period (a) is at least partially temporally after a switching operation by which the IEGR rate has an increasing curve as a result of the switching operation into the activated state.

3. Method according to one of the preceding claims, **characterized in that** a compressor (42, 70) is used as the means (66) for reducing or increasing the charging pressure (78) in the adaptation period (a).

4. Method according to one of the preceding claims, **characterized in that** the charging pressure (78) is increased in a time period prior to the reduction according to Claim 2 and/or **that** the charging pressure (78) is reduced again in a time period following an increase according to Claim 1.

5. Method according to one of the preceding claims, **characterized in that** the time period for increasing the charging pressure (78) according to Claim 1 is selected such that the charging pressure (78) provided by the means (66) at the time of the switching operation is at least 5 percent of the maximally provided charging pressure.

6. Method according to one of the preceding claims, **characterized in that** the IEGR rate is reduced at least in an adaptation period (a) according to Claim 1 which extends immediately prior to the switching operation to the extent to which the EEGR rate is increased within the same time period so that the (total) actual EGR rate resulting from the addition of the IEGR rate and EEGR rate is kept approximately constant.

7. Method according to one of the preceding claims, **characterized in that** the reduction of the charging pressure (78) according to Claim 2 and/or the increase in the charging pressure (78) according to Claim 1 is effected completely or partially by controlling the throttle valve (68) of the combustion engine (10).

8. Method according to one of the preceding claims, **characterized in that** the switching operation according to Claim 2 and/or the switching operation according to Claim 1 is initiated when a predetermined load threshold of the combustion engine (10) and/or a predetermined temperature of the combustion engine (10) and/or a predetermined temperature of an exhaust gas aftertreatment system (30) is reached.

9. Method according to one of the preceding claims, **characterized in that** the charging pressure (78) is reduced according to Claim 2 by at least 50 mbar and/or is increased according to Claim 1 by at least 50 mbar.

10. Combustion engine having a control unit for carrying out a method according to one of the preceding claims.

## Revendications

1. Procédé de commande d'un système de recirculation des gaz d'échappement d'un moteur à combustion interne (10) comprenant au moins une chambre de combustion (12), dans lequel la chambre de combustion (12) présente au moins une soupape d'entrée, qui, à l'état ouvert, relie un canal d'entrée (14) à la chambre de combustion (12), dans lequel la chambre de combustion (12) présente au moins une soupape de sortie, qui, à l'état ouvert, relie la chambre de combustion (12) à un canal de sortie (16), dans lequel une recirculation des gaz d'échappement interne (IAGR) est prévue et dans lequel une recirculation des gaz d'échappement externe (EAGR) est prévue, dans lequel le procédé concerne la commande de taux de recirculation des gaz d'échappement (taux AGR), laquelle est composée d'un taux de recirculation des gaz d'échappement interne (taux IAGR) et d'un taux de recirculation des gaz d'échappement externe (taux EAGR), et dans lequel la recirculation des gaz d'échappement interne est formée de manière commutable au moins en deux étapes distinctes entre un état activé et un état partiellement activé ou désactivé par un processus de commutation,
**caractérisé en ce que**
la pression de suralimentation (78) est augmentée par des moyens adaptés (66) au moins partiellement durant une période d'adaptation (a), dans lequel la période d'adaptation (a) se trouve temporellement au moins partiellement avant un processus de commutation, par le biais duquel le taux IAGR présente un saut à la suite du processus de commutation dans l'état partiellement activé ou désactivé.

2. Procédé selon la revendication précédente, **caractérisé en ce que** la pression de suralimentation (78) est réduite par des moyens adaptés (66) au moins partiellement durant une période d'adaptation (a), dans lequel la période d'adaptation (a) se trouve temporellement au moins partiellement après un processus de commutation, par le biais duquel le taux IAGR présente une évolution croissante à la suite du processus de commutation dans l'état activé.

3. Procédé selon l'une quelconque des revendications précédentes, **caractérisé en ce qu'**un compresseur (42, 70) est utilisé comme moyens (66) pour la réduction ou l'augmentation de la pression de suralimentation (78) dans la période d'adaptation (a).

4. Procédé selon l'une quelconque des revendications précédentes, **caractérisé en ce que** la pression de suralimentation (78) est augmentée durant une période avant la réduction selon la revendication 2 et/ou que la pression de suralimentation (78) est de nouveau réduite durant une période suivant l'augmentation selon la revendication 1.

5. Procédé selon l'une quelconque des revendications précédentes, **caractérisé en ce que** la période pour l'augmentation de la pression de suralimentation (78) selon la revendication 1 est choisie de telle sorte que la pression de suralimentation (78) fournie par les moyens (66) s'élève au moment du processus de commutation à au moins 5 pour cent de la pression de suralimentation maximale pouvant être fournie.

6. Procédé selon l'une quelconque des revendications précédentes, **caractérisé en ce que** le taux IAGR est réduit au moins durant une période d'adaptation (a) s'étendant directement avant le processus de commutation selon la revendication 1 dans la mesure où le taux EAGR est augmenté durant la même période, de sorte que le taux AGR réel (total) obtenu par addition du taux IAGR et du taux EAGR soit maintenu approximativement constant.

7. Procédé selon l'une quelconque des revendications précédentes, **caractérisé en ce que** la réduction de la pression de suralimentation (78) selon la revendication 2 et/ou l'augmentation de la pression de suralimentation (78) selon la revendication 1 sont provoquées totalement ou partiellement par la commande du papillon des gaz (68) du moteur à combustion interne (10).

8. Procédé selon l'une quelconque des revendications précédentes, **caractérisé en ce que** le processus de commutation selon la revendication 2 et/ou le processus de commutation selon la revendication 1 sont initiés lorsqu'un seuil de suralimentation prédéfini du moteur à combustion interne (10) et/ou une température prédéfinie du moteur à combustion interne (10) et/ou une température prédéfinie d'un système d'épuration des gaz d'échappement (30) sont atteints.

9. Procédé selon l'une quelconque des revendications précédentes, **caractérisé en ce que** la pression de suralimentation (78) est réduite selon la revendication 2 d'au moins 50 mbar et/ou augmentée selon la revendication 1 d'au moins 50 mbar.

10. Moteur à combustion interne comprenant une unité de commande pour la réalisation d'un procédé selon l'une quelconque des revendications précédentes.
